# EUROPÄISCHE PATENTSCHRIFT

(11) **EP 3 017 438 B1**
(45) Veröffentlichungstag und Bekanntmachung des Hinweises auf die Patenterteilung: **23.10.2019**
(21) Anmeldenummer: 14736340.2
(22) Anmeldetag: 30.06.2014
(51) Int. Cl.: G08G 1/16, A01D 75/18

(54) **ANTIKOLLISIONSSYSTEM FÜR EIN LANDWIRTSCHAFTLICHES FAHRZEUG MIT SELBSTTÄTIGER ERKENNUNG DER ABMESSUNGEN EINER LAST**
ANTI-COLLISION SYSTEM FOR AN AGRICULTURAL VEHICLE WITH AUTOMATIC DETECTION OF THE DIMENSIONS OF A LOAD
SYSTÈME ANTICOLLISION POUR UN VÉHICULE AGRICOLE AVEC DÉTECTION AUTOMATIQUE DES DIMENSIONS D'UNE CHARGE

(30) Priorität: 03.07.2013 DE 102013011089
(43) Veröffentlichungstag der Anmeldung: 11.05.2016
(73) Patentinhaber: Deere & Company, Moline, IL 61265 (US)
(72) Erfinder: REINARDS, Marco, 67269 Grünstadt (DE)
(74) Vertreter: Dehnhardt, Florian Christopher
(86) Internationale Anmeldenummer: PCT/EP2014/063847
(87) Internationale Veröffentlichungsnummer: WO 2015/000839

(56) Entgegenhaltungen:
- EP-A1- 1 731 983
- EP-A1- 2 063 406
- DE-A1-102005 062 151
- DE-A1-102008 057 027
- DE-C1- 19 910 795

## Beschreibung

Die Erfindung betrifft ein Antikollisionssystem für ein landwirtschaftliches Fahrzeug.

### Stand der Technik

In der Landwirtschaft sind vielfältige Aufgaben zu bewältigen. Man bedient sich daher üblicherweise eines universell einsetzbaren Fahrzeugs, in der Regel eines Traktors, an das unterschiedliche Lasten angebaut oder angehängt werden, je nach der spezifischen Aufgabe. Da nicht immer gut ausgebildetes, erfahrenes Personal zur Verfügung steht, werden oft Aushilfskräfte eingesetzt. Es besteht demnach ein gewisses Unfallrisiko, beispielsweise beim Befahren enger Feldwege, da sich die Last nicht im Blickfeld des Fahrers befindet und in unterschiedlichem Maß über die seitlichen und oberen Begrenzungen des Fahrzeugs hinausragen kann, beispielsweise bei Bodenbearbeitungswerkzeugen, Heubearbeitungsgeräten oder befüllbaren Anhängern, bei denen sich die Abmessungen sogar bei der Arbeit ändern, und der Fahrer zudem als Aushilfskraft mit den Abmessungen der Last nicht gut vertraut ist.

Im Stand der Technik sind Anti-Kollisionssensoren für Kraftfahrzeuge bekannt, bei denen der Umriss des zu schützenden Fahrzeugs bereits bekannt und fest einprogrammiert ist oder sich aus der Anbringung der Sensoren ergibt (DE 101 13 413 A1, US 7 076 366 B2, US 6 012 008 A, JP 2007 201 748 A). Derartige Sensoren eignen sich nicht für die im vorhergehenden Absatz erwähnten landwirtschaftlichen Fahrzeuge, die unterschiedlich große Lasten hinter sich mitführen können.

Die DE 10 2008 057 027 A1 beschreibt ein Zugfahrzeug zum Transport von Flugzeugen oder Lastkähnen, das einen optischen, insbesondere als Kamerasystem aufgeführten Sensor umfasst, der auf die Last ausgerichtet ist und dessen Signal zur automatischen Erkennung der Last dient. Auf diese Weise soll die Last kollisionsfrei an Hindernissen vorbeigeführt werden, die sich an in einer Karte eingezeichneten Positionen befinden. Aufgrund der Unterschiede in den Lasten und der Notwendigkeit, Hindernisse auf einem zu befahrenden Weg zunächst in einer Karte zu erfassen, eignet sich diese Vorgehensweise ebenfalls nicht für landwirtschaftliche Anwendungen, bei denen die Hindernisse, wie entgegen kommender Verkehr, in vielen Fällen beweglich sind.

Aus der EP 2 063 406 A1 geht ferner eine Anordnung für ein Kraftfahrzeug zur Warnung vor Hindernissen mit nicht ausreichender Durchfahrtshöhe und/oder nicht ausreichender Durchfahrtsbreite hervor. Die Anordnung umfasst eine Vergleichs- und Warnsignale generierende Einrichtung und eine Sensoreinrichtung. Die Vergleichs- und Warnsignale generierende Einrichtung ist mit einem ersten Speicher für durchfahrtsrelevante Daten oder Parameter des Kraftfahrzeugs und mit einem zweiten Speicher für durchfahrtsrelevante Daten der Hindernisse verbunden. Die Sensoreinrichtung dient zur Abtastung und Erfassung von durchfahrtsrelevanten Daten vorausliegender Hindernisse und zur Eingabe dieser Daten in den zweiten Speicher. In der Vergleichs- und Warnsignale generierenden Einrichtung werden die durchfahrtsrelevanten Daten aus dem ersten und zweiten Speicher derart miteinander verglichen, dass ein Warnsignal für den Fahrer generiert wird, wenn die dem Hindernis zugeordneten, durch die Sensoreinrichtung ermittelten Daten aus dem zweiten Speicher mit den dem Fahrzeug zugeordneten Daten aus dem ersten Speicher übereinstimmen oder diese unterschreiten.

### Aufgabe der Erfindung

Die der Erfindung zu Grunde liegende Aufgabe wird darin gesehen, ein Antikollisionssystem für ein landwirtschaftliches Fahrzeug bereitzustellen, bei dem die erwähnten Probleme nicht oder in einem verminderten Maße auftreten.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Antikollisionssystem für ein landwirtschaftliches Fahrzeug weist einen ersten Sensor zur Erfassung der Abmessungen eines in Fahrtrichtung vor dem Fahrzeug zur Verfügung stehenden Lichtraumprofils, einen zweiten Sensor zur kontinuierlichen Erfassung der Abmessungen einer vom Fahrzeug bewegten Last, und eine mit dem ersten Sensor und dem zweiten Sensor verbundene Verarbeitungseinrichtung auf, die anhand der Signale des ersten Sensors und des zweiten Sensors die Abmessungen des Lichtraumprofils mit den kontinuierlich erfassten Abmessungen der Last vergleicht und im Falle einer drohenden Kollision zwischen der Last und einer Begrenzung des Lichtraumprofils ein Warnsignal abgibt.

Auf diese Weise werden die Abmessungen der Last durch den zweiten Sensor ermittelt und mit den mittels des ersten Sensors ermittelten Abmessungen des Lichtraumprofils, d.h. der in Fahrtrichtung vor dem Fahrzeug zur Verfügung stehenden, vertikalen Querschnittsfläche verglichen. Falls eine Berührung zwischen der Last und einer Begrenzung des Lichtraumprofils droht, wird ein Warnsignal abgegeben.

Die Sensoren können jeweils die Abmessungen des Lichtraumprofils und der Last in horizontaler und vertikaler Richtung erfassen.

Das Warnsignal kann einer Geschwindigkeitsvorgabeeinrichtung des Fahrzeugs zugeführt werden, um das Fahrzeug im Falle einer drohenden Kollision zwischen der Last und einer Begrenzung des Lichtraumprofils anzuhalten. Alternativ oder zusätzlich kann eine Lenkeinrichtung des Fahrzeugs im Sinne einer kollisionsvermeidenden Lenkbewegung angesteuert werden.

Die Sensoren können jeweils Stereokameras mit Bildverarbeitungssystemen und/oder abtastende Laserentfernungsmesser und/oder PMD-Kameras und/oder Ultraschallentfernungsmesser umfassen.

### Ausführungsbeispiel

Anhand der Abbildung wird ein Ausführungsbeispiel der Erfindung erläutert. Es zeigt:
- Fig. 1: eine seitliche Ansicht eines landwirtschaftlichen Traktors mit einer gezogenen Last und einem Antikollisionssystem, und
- Fig. 2: einen Bildschirm einer Bedienerschnittstelle.

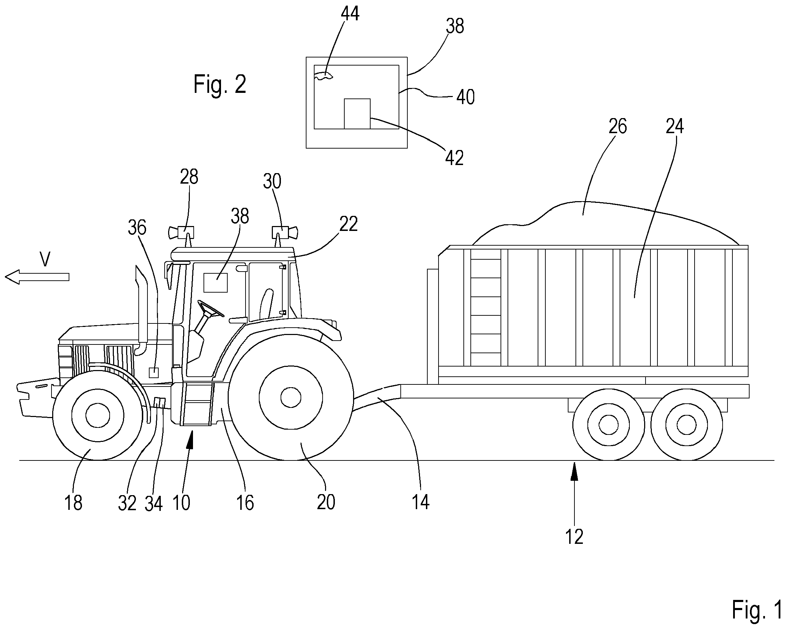

Die Figur 1 zeigt ein landwirtschaftliches Fahrzeug 10 in Form eines Traktors, das an einer Deichsel 14 eine Last 12 in Form eines Transportwagens für Silage hinter sich herzieht. Das Fahrzeug 10 umfasst ein Fahrgestell 16 mit vorderen, lenkbaren Rädern 18 und antreibbaren Hinterrädern 20 sowie eine Kabine 22 mit einem Arbeitsplatz für einen Bediener. Die Deichsel 14 ist rückwärtig am Fahrgestell durch eine Kupplung (nicht gezeigt) lösbar am Fahrgestell 16 angekuppelt.

Die vertikalen Abmessungen der Last 12, die im unbeladenen Zustand etwa so hoch ist wie das Dach der Kabine 22 können im Arbeitsbetrieb variieren, wenn der Ladebehälter 24 der Last 12 über dessen obere Kanten hinaus beladen werden, wie es beispielsweise bei der Ernte von Silage mit einem Feldhäcksler der Fall sein kann, der die Silage in den Ladebehälter 24 überlädt, sodass sich größere Hügel 26 von Erntegut im Ladebehälter 24 bilden, die über dessen obere Kanten hinausragen.

Um selbsttätig Kollisionen zwischen der Last 12 und einem eventuellen, sich in Fahrtrichtung V vor dem Fahrzeug 10 befindlichen Hindernis, wie beispielsweise einer Brücke oder auf einen Weg hängenden Ästen zu vermeiden, ist gemäß der vorliegenden Erfindung ein Antikollisionssystem vorgesehen. Es umfasst einen ersten Sensor 28, einen zweiten Sensor 30 und eine Verarbeitungseinheit 32. Die Sensoren 28, 30 sind auf dem Dach der Kabine 22 angebracht.

Der erste Sensor 28 ist hier als Stereokamera mit zwei seitlich, quer zur Fahrtrichtung V nebeneinander angeordneten Kameras und einem Bildverarbeitungssystem ausgebildet, das auch in der Verarbeitungseinheit 32 enthalten sein kann. Das Bildverarbeitungssystem gibt kontinuierlich ein Signal ab, das Informationen hinsichtlich des vor dem Fahrzeug zur Verfügung stehenden Lichtraumprofils enthält, d.h. den seitlichen Abstand eventuell erfasster Hindernisse von der Längsmittelebene des Fahrzeugs 10 und den vertikalen Abstand dieser Hindernisse vom Erdboden.

Der zweite Sensor 30 ist hier ebenfalls als Stereokamera mit zwei seitlich, quer zur Fahrtrichtung V nebeneinander angeordneten Kameras und einem Bildverarbeitungssystem ausgebildet, das auch in der Verarbeitungseinheit 32 enthalten sein kann. Das Bildverarbeitungssystem gibt kontinuierlich ein Signal ab, das Informationen hinsichtlich der Abmessungen der Last 12 enthält, d.h. den seitlichen Abstand der beiden seitlichen Begrenzungen der Last 12 von der Längsmittelebene des Fahrzeugs 10 und den vertikalen Abstand der oberen Begrenzung der Last vom Erdboden.

Die elektronische Verarbeitungseinrichtung 32 vergleicht kontinuierlich auf beiden Seiten die horizontalen Abstände eventueller erfasster Hindernisse im Signal des ersten Sensors 28 von der Längsmittelebene des Fahrzeugs 10 mit den seitlichen Abständen der beiden seitlichen Begrenzungen der Last von der Längsmittelebene des Fahrzeugs 10. Dabei kann, wenn die vorderen Räder 18 und/oder die Deichsel 14 nicht in Geradeausstellung sind, auch die Kinematik des Fahrzeugs 10 mit der Last 12 und der Abstand zwischen dem Hindernis und dem Fahrzeug in Fahrtrichtung V berücksichtigt werden, um die Präzision des Vergleichs zu verbessern. Hierzu sei auf die Offenbarung der DE 10 2008 057 027 A1 verwiesen, die durch Verweis mit in die vorliegenden Unterlagen aufgenommen wird. Bei einer simplen Ausführungsform werden hingegen einfach die mit den Sensoren 28 und 30 erfassten Abstände in beiden seitlichen Richtungen verglichen.

Analog vergleicht die Verarbeitungseinrichtung 32 im Betrieb die vertikale Position eines Hindernisses mit der vertikalen Position der oberen Begrenzung der Last. Hier kann ggf. ein in Fahrtrichtung V ansteigendes oder absinkendes Bodenprofil mit dem ersten Sensor 28 erfasst und durch die Verarbeitungseinrichtung 32 berücksichtigt werden.

Falls in horizontaler und/oder vertikaler Richtung eine Kollision der Last mit dem Hindernis droht, gibt die Verarbeitungseinrichtung 32 ein Warnsignal ab, vorzugsweise in Form eines akustischen oder optischen Signals über eine Bedienerschnittstelle 38 an einen Bediener in der Kabine 22. Alternativ oder zusätzlich kann in diesem Fall durch die die Verarbeitungseinrichtung 32 eine (die Drehzahl des Verbrennungsmotors und/oder Getriebeübersetzung und/oder Bremsen beeinflussende) Geschwindigkeitsvorgabeeinrichtung 34 des Fahrzeugs 10 durch ein entsprechendes Signal veranlasst werden, das Fahrzeug 10 anzuhalten, und/oder es wird eine Lenkeinrichtung 36 durch ein geeignetes Signal im Sinne einer Kollisionsvermeidung angesteuert.

Die Figur 2 zeigt die Anzeigeeinrichtung 40 einer in der Kabine 22 angeordneten Bedienerschnittstelle 38. Dort werden schematisch der Umriss 42 der vom zweiten Sensor 30 erfassten Last 12 und ggf. vom ersten Sensor 28 erfasste Hindernisse 44, im Beispiel ein Ast, angezeigt. Falls eine Kollision droht, kann die betreffende Stelle farblich hervorgehoben werden. In die Verarbeitungseinrichtung 32 sind vorzugsweise auch die horizontalen und vertikalen Abmessungen des Fahrzeugs 10 einprogrammiert. Die Verarbeitungseinrichtung 32 vergleicht auch diese Abmessungen mit der Position eines eventuell vom ersten Sensor 28 erfassten Hindernisses und gibt im Fall einer drohenden Kollision das beschriebene Warnsignal und/oder Anhaltesignal an die Geschwindigkeitsvorgabeeinrichtung 34 und/oder Lenksignal an die Lenkeinrichtung 36.

Wenn die Last 12 an der Vorderseite des Fahrzeugs 10 angebracht sein sollte, z.B. bei einem Frontmähwerk oder einer Bodenwalze, kann der zweite Sensor 30 auch nach vorn ausgerichtet werden, indem er manuell oder motorisch um 180° um die Hochachse gedreht wird. Alternativ oder zusätzlich übernimmt in diesem Fall der erste Sensor 28 dessen Aufgabe.

Die Signale des ersten Sensors 28 können weiterhin zur Erkennung von Verkehrszeichen, Straßenmarkierungen und -begrenzungen etc. herangezogen werden und zur Bereitstellung von Signalen für die Geschwindigkeitsvorgabeeinrichtung 34 und/oder die Lenkeinrichtung 36 dienen, um den Bediener zu entlasten.

## Patentansprüche

1. Antikollisionssystem für ein landwirtschaftliches Fahrzeug (10), umfassend einen ersten Sensor (28) zur Erfassung der Abmessungen eines in Fahrtrichtung vor dem Fahrzeug (10) zur Verfügung stehenden Lichtraumprofils, einen zweiten Sensor (30) zur kontinuierlichen Erfassung der Abmessungen einer vom Fahrzeug (10) bewegten Last (12), und eine mit dem ersten Sensor (28) und dem zweiten Sensor (30) verbundene Verarbeitungseinrichtung (32), die eingerichtet ist, anhand der Signale des ersten Sensors (28) und des zweiten Sensors (32) die Abmessungen des Lichtraumprofils mit den kontinuierlich erfassten Abmessungen der Last (12) zu vergleichen und im Falle einer drohenden Kollision zwischen der Last (12) und einer Begrenzung des Lichtraumprofils ein Warnsignal abzugeben.

2. Antikollisionssystem nach Anspruch 1, wobei die Sensoren (28, 30) jeweils die Abmessungen in horizontaler und vertikaler Richtung erfassen.

3. Antikollisionssystem nach Anspruch 1 oder 2, wobei das Warnsignal einer Geschwindigkeitsvorgabeeinrichtung (34) des Fahrzeugs (10) zuführbar ist, um das Fahrzeug (10) im Falle einer drohenden Kollision zwischen der Last (12) und einer Begrenzung des Lichtraumprofils anzuhalten.

4. Antikollisionssystem nach einem der Ansprüche 1 bis 3, wobei die Verarbeitungseinrichtung (32) mit einer Lenkeinrichtung (36) des Fahrzeugs (10) verbunden ist und eingerichtet ist, die Lenkeinrichtung (36) bei drohender Kollision im Sinne einer kollisionsvermeidenden Lenkbewegung anzusteuern.

5. Antikollisionssystem nach einem der vorhergehenden Ansprüche, wobei die Sensoren (28, 30) jeweils Stereokameras mit Bildverarbeitungssystemen und/oder abtastende Laserentfernungsmesser und/oder PMD-Kameras und/oder Ultraschallentfernungsmesser umfassen.

6. Antikollisionssystem nach einem der vorhergehenden Ansprüche, wobei die Verarbeitungseinrichtung (32) mit einer Bedienerschnittstelle (38) verbunden ist und die Verarbeitungseinrichtung (32) und die Bedienerschnittstelle (38) eingerichtet sind, auf einer Anzeigeeinrichtung (40) der Bedienerschnittstelle (38) einen Umriss (42) der vom zweiten Sensor (30) erfassten Last (12) und vom ersten Sensor (28) erfasste Hindernisse (44) anzuzeigen.

7. Antikollisionssystem nach Anspruch 6, wobei die Verarbeitungseinrichtung (32) und die Bedienerschnittstelle (38) eingerichtet sind, auf der Anzeigeeinrichtung (40) eine Stelle, an der eine Kollision droht, farblich hervorzuheben.

8. Antikollisionssystem nach einem der vorhergehenden Ansprüche, wobei sich die Last (12) an der Vorder- oder Rückseite des Fahrzeugs (10) befindet.

9. Landwirtschaftliches Fahrzeug (10), insbesondere Traktor, mit einem Antikollisionssystem nach einem der vorhergehenden Ansprüche.

## Claims

1. Anti-collision system for an agricultural vehicle (10), comprising a first sensor (28) for detecting the dimensions of a clearance profile available in front of the vehicle (10) in the direction of travel, a second sensor (30) for continuously detecting the dimensions of a load (12) moved by the vehicle (10), and a processing device (32) which is connected to the first sensor (28) and the second sensor (30) and is configured to compare the dimensions of the clearance profile with the continuously detected dimensions of the load (12) on the basis of the signals of the first sensor (28) and of the second sensor (32), and to output a warning signal in the event of a risk of a collision between the load (12) and a boundary of the clearance profile.

2. Anti-collision system according to Claim 1, wherein the sensors (28, 30) each detect the dimensions in the horizontal and vertical directions.

3. Anti-collision system according to Claim 1 or 2, wherein the warning signal can be fed to a speed specifying device (34) of the vehicle (10), in order to stop the vehicle (10) in the event of a risk of a collision between the load (12) and a boundary of the clearance profile.

4. Anti-collision system according to one of Claims 1 to 3, wherein the processing device (32) is connected to a steering device (36) of the vehicle (10) and is configured to actuate the steering device (36) in the form of a collision-avoiding steering movement when there is risk of a collision.

5. Anti-collision system according to one of the preceding claims, wherein the sensors (28, 30) each comprise stereo cameras with image processing systems and/or scanning laser distance meters and/or PMD cameras and/or ultrasound distance meters.

6. Anti-collision system according to one of the preceding claims, wherein the processing device (32) is connected to an operator interface (38), and the processing device (32) and the operator interface (38) are configured to display, on a display device (40) of the operator interface (38), an outline (42) of the load (12) detected by the second sensor (30) and obstacles (44) detected by the first sensor (28) .

7. Anti-collision system according to Claim 6, wherein the processing device (32) and the operator interface (38) are configured to emphasise through colour a location at which there is a risk of a collision on the display device (40).

8. Anti-collision system according to one of the preceding claims, wherein the load (12) is located on the front side or rear side of the vehicle (10).

9. Agricultural vehicle (10), in particular tractor, having an anti-collision system according to one of the preceding claims.

## Revendications

1. Système anticollision destiné à un véhicule agricole (10), ledit système anticollision comprenant un premier capteur (28) destiné à détecter les dimensions d'un profil d'espace libre disponible en avant du véhicule (10) par référence au sens de roulement, un deuxième capteur (30) destiné à détecter en continu les dimensions d'une charge (12) déplacée par le véhicule (10) et un moyen de traitement (32) relié au premier capteur (28) et au deuxième capteur (30) et adapté pour comparer sur la base des signaux du premier capteur (28) et du deuxième capteur (32) les dimensions du profil d'espace libre avec les dimensions de la charge (12) détectées en continu et pour délivrer un signal d'avertissement en cas de collision imminente entre la charge (12) et une limite du profil d'espace libre.

2. Système anticollision selon la revendication 1, les capteurs (28, 30) détectant chacun les dimensions dans les directions horizontale et verticale.

3. Système anticollision selon la revendication 1 ou 2, le signal d'avertissement pouvant être amené à un dispositif de prescription de vitesse (34) du véhicule (10) pour arrêter le véhicule (10) en cas de collision imminente entre la charge (12) et une limite du profil d'espace libre.

4. Système anticollision selon l'une des revendications 1 à 3, le moyen de traitement (32) étant relié à un dispositif de direction (36) du véhicule (10) et adapté pour commander le dispositif de direction (36) en cas de collision dans le sens d'un mouvement de direction évitant une collision.

5. Système anticollision selon l'une des revendications précédentes, les capteurs (28, 30) comprenant chacun des caméras stéréo équipées de systèmes de traitement d'images et/ou des télémètres laser à balayage et/ou des caméras PMD et/ou des télémètres à ultrasons.

6. Système anticollision selon l'une des revendications précédentes, le dispositif de traitement (32) étant relié à une interface utilisateur (38) et le dispositif de traitement (32) et l'interface utilisateur (38) étant adaptés pour afficher sur un dispositif d'affichage (40) de l'interface utilisateur (38) un contour (42) de la charge (12) détectée par le deuxième capteur (30) et des obstacles (44) détectés par le premier capteur (28) .

7. Système anticollision selon la revendication 6, le dispositif de traitement (32) et l'interface utilisateur (38) étant adaptés pour mettre en évidence par une couleur, sur le dispositif d'affichage (40), un emplacement où une collision est imminente.

8. Système anticollision selon l'une des revendications précédentes, la charge (12) étant située à l'avant ou à l'arrière du véhicule (10).

9. Véhicule agricole (10), notamment tracteur, comprenant un système anticollision selon l'une des revendications précédentes.
